# EUROPÄISCHE PATENTSCHRIFT

(11) **EP 2 217 803 B1**
(45) Veröffentlichungstag und Bekanntmachung des Hinweises auf die Patenterteilung: **09.03.2011**
(21) Anmeldenummer: 08857582.4
(22) Anmeldetag: 16.10.2008
(51) Int. Cl.: F03B 13/24, F03B 13/06, F03D 1/06

(54) **WELLS-TURBINE MIT PASSIVER ROTORBLATTVERSTELLUNG**
WELLS TURBINE HAVING PASSIVE ROTOR BLADE DISPLACEMENT
TURBINE WELLS À MOUVEMENT PASSIF DES PALES DE ROTOR

(30) Priorität: 06.12.2007 DE 102007059038
(43) Veröffentlichungstag der Anmeldung: 18.08.2010
(73) Patentinhaber: Voith Patent GmbH, 89522 Heidenheim (DE)
(72) Erfinder: ARLITT, Raphael, 89077 Ulm (DE); BRONOWSKI, Helmut, 89522 Heidenheim (DE); WEILEPP, Jochen, 89518 Heidenheim (DE); ENGELHARDT, Michael, 89518 Heidenheim (DE); STARZMANN, Ralf, 89555 Söhnstetten (DE)
(74) Vertreter: Dr. Weitzel & Partner
(86) Internationale Anmeldenummer: PCT/EP2008/008754
(87) Internationale Veröffentlichungsnummer: WO 2009/071150

(56) Entgegenhaltungen:
- CH-A5- 660 770
- FR-A1- 2 401 329
- GB-A- 2 250 321
- US-A1- 2005 271 508

## Beschreibung

Die Erfindung betrifft eine Wells-Turbine mit passiver Rotorblattverstellung, insbesondere zur Verwendung in einem Wellenkraftwerk.

Wells-Turbinen sind bekannt - hierzu wird beispielhaft auf die US-Patentschrift US 5191225 A verwiesen. Diese Schrift offenbart ferner ein OWC-Kraftwerk, in dem eine zweistufige Wells-Turbine aufgenommen ist. In einem OWC-Kraftwerk wird Energie aus einer oszillierenden Wassersäule (Oscillating Water Column, OWC) gewonnen. Hierzu wird eine Wellenkammer vorgesehen, die eine unter dem Wasserspiegel liegende Zuströmungsöffnung aufweist. Brandet eine Welle gegen die Außenwandung der Wellenkammer, so erfolgt ein Zustrom von Meerwasser in die Kammer, wodurch sich der darin befindliche Wasserspiegel anhebt. Entsprechend wird bei einer auslaufenden Welle der Wasserspiegel absinken, sodass sich eine Oszillationsbewegung der Wassersäule in der Wellenkammer entsprechend zur Wellenfrequenz ergibt. Oberhalb des Wasserspiegels ist in der Wellenkammer eine Luftmasse eingeschlossen, die durch einen begrenzten Belüftungskanal mit der Umgebungsatmosphäre in Verbindung steht. Entsprechend zur Oszillationsbewegung des Wasserkörpers in der Wellenkammer wird die darüber befindliche Luftmasse einer Druckschwankung unterliegen, sodass zum Druckausgleich im Belüftungskanal eine ständig wechselnde bidirektionale Luftströmung hoher Geschwindigkeit entsteht, die zur Gewinnung elektrischer Energie verwendet werden kann.

Das Dokument US 2005/0271508 A1 wird als nächstliegenden stand der Technik angeschen.

Zur Ausnutzung einer bidirektionalen Anströmung wird eine Turbine verwendet, die für eine Anströmung aus zwei Richtungen ihre Rotationsrichtung beibehält. Neben Impulsturbinen kommen hierfür insbesondere die voranstehend genannten Wells-Turbinen in Frage. Dabei sind Wells-Turbinen mit festen Rotorblättern bekannt. Diese weisen zur bidirektionalen Anströmung ein symmetrisches Profil auf, dessen Gestalt tropfenförmig ist. Einen möglichen Profilverlauf stellt das NACA 0012-Profil dar. Dieses Profil legt eine Profilkontur mit einer Dicke von 12% bezogen auf die Sehnenlänge fest. Dabei verläuft die Profilsehne und damit die Symmetrielinie des Profils parallel zur Rotationsebene der Turbine. Beim Betrieb der Wells-Turbine liegt ein effektiver Anströmungswinkel gegen das Profil der jeweiligen Turbinenblätter vor, der sich durch die Vektoraddition der Umlaufgeschwindigkeit und der Anströmungsgeschwindigkeit der antreibenden Luftströmung ergibt. Typischerweise sind die Anströmungswinkel klein, sodass das symmetrische Profil im Sinne eines Tragflügels wirkt und die am aerodynamischen Zentrum angreifenden Kräfte eine Teilkomponente in Tangentialrichtung in Bezug auf die Nabe der Wells-Turbine aufweisen, die dem Vortrieb dient. Die weiteren aerodynamischen Kräfte senkrecht zu dieser Tangentialrichtung sind über die Turbinenlager aufzufangen.

Für Wells-Turbinen ergibt sich neben der Problematik einer hohen Geräuschemission und dem schlechten Anlaufverhalten die Schwierigkeit, dass mit zunehmendem Anströmungswinkel, typischerweise ab 13°, an den Turbinenblättern ein Strömungsabriss erfolgen kann. Ein solchermaßen großer Anströmungswinkel kann dann auftreten, wenn aufgrund eines stark variierenden Luftstroms eine schnelle Zunahme der Anströmungsgeschwindigkeit vorliegt und der Anstieg der Umfangsgeschwindigkeit der Wells-Turbine nicht schnell genug erfolgt, beziehungsweise diese bereits auf ihrer Nenndrehzahl läuft. Derartige Verhältnisse können insbesondere in den voranstehend beschriebenen OWC-Kraftwerken auftreten, sodass für dieses Anwendungsfeld Wells-Turbinen entwickelt wurden, die mit einer Vorrichtung zur Veränderung des Anstellwinkels der Rotorblätter versehen sind. Unter dem Anstellwinkel wird nachfolgend der Winkel zwischen der Profilsehne eines Rotorblatts und der Rotationsebene der Wells-Turbine verstanden.

Die voranstehend genannte Anstellwinkeleinstellung kann durch eine aktive Führung erfolgen, indem die Rotorblätter an einer Nabe der Wells-Turbine drehbar gelagert sind und eine Stelleinrichtung vorgesehen ist, die die Rotorblätter entsprechend der aktuell vorliegenden Umlaufgeschwindigkeit und der jeweiligen Anströmungsverhältnisse bezüglich des Anstellwinkels einstellt. Demnach ist es zusätzlich notwendig, eine Regelungseinrichtung vorzusehen. Diese hat typischerweise nicht nur die Aufgabe, die Rotorblatteinstellung so zu bewirken, dass ein Strömungsabriss verhindert wird, sondern es wird vorteilhafterweise zusätzlich eine Rotorblatteinstellung vorgenommen, für die das Wirkungsgradoptimum für den vorliegenden Durchflusskoeffizienten erreicht wird. Dabei ist bekannt, dass für größere Durchflusskoeffizienten eine Wirkungsgraderhöhung bei einer Anstellung der Rotorblätter mit einem Anstellwinkel von mehreren Grad eintritt. Für den typischen Betrieb einer Wells-Turbine in einem OWC-Kraftwerk ist es daher vorteilhaft, Anstellwinkel in einer Größenordnung von wenigstens 6° vornehmen zu können. Bevorzugt werden aus Effizienzgründen noch höhere Anstellwinkel von wenigstens 8° und mehr. Darüber hinaus kann die aktive Einstellung des Anstellwinkels den Anlauf einer Wells-Turbine unterstützen, der im Regelfall durch einen motorischen Betrieb des Generators erfolgt.

US 2005/0271508 A1 offenbart eine Turbine mit flexiblen Schaufeln. Dabei geht um das Steigern des Wirkungsgrades. Zur Lösung werden Schaufeln verwendet, die einen starren sowie einen flexiblen Bereich aufweisen.

Nachteilig an einer aktiv wirkenden Vorrichtung zur Nachstellung des Anstellwinkels der Rotorblätter ist der konstruktive Aufwand, der zur Ausbildung der Stelleinrichtungen und Regelungsvorrichtungen notwendig ist. Zur Umgehung dieser Problematik wurde eine passive Rotorblatteinstellung vorgeschlagen, hierzu wird auf die JP 63219801 A verwiesen. Dieses Dokument beschreibt drehbar an einer Nabe einer Wells-Turbine angelenkte Rotorblätter, die zwischen zwei durch Anschläge vorgegebene Anstellwinkeleinstellungen pendeln können. Diese Anordnung verbessert die Selbstanlaufeigenschaften der Wells-Turbine im Fall des Eintritts eines Strömungsabrisses. Allerdings ist es mit den bekannten passiven Rotorblattverstellungen nicht möglich, während des normalen Betriebs einen solchermaßen hinreichend großen Anstellwinkel der Rotorblätter einzustellen, dass in Abhängigkeit vom Durchflusskoeffizienten der Anströmung und der Rotationsgeschwindigkeit der Wirkungsgrad optimiert wird.

Der Erfindung liegt die Aufgabe zugrunde, eine passive Rotorblattverstellung für eine Wells-Turbine so auszubilden, dass diese zur Wirkungsgradverbesserung, insbesondere bei großen Durchflusskoeffizienten, und für den Betrieb auf niedrigeren Nenndrehzahlen dient. Ferner soll die Vorrichtung dazu geeignet sein, den Arbeitsbereich der Wells-Turbine zu erweitern, das heißt den Bereich zugänglicher Anströmungswinkel ohne Strömungsabriss zu vergrößern. Darüber hinaus soll sich die Vorrichtung durch konstruktive und fertigungstechnische Einfachheit auszeichnen.

Die der Erfindung zugrunde liegende Aufgabe wird durch die Merkmale des unabhängigen Anspruchs gelöst.

Zur Ausbildung einer passiven Rotorblattverstellung für Wells-Turbinen haben die Erfinder erkannt, dass zum einen die Drehachse der Rotorblätter in einem geeigneten Verhältnis zum aerodynamischen Zentrum einzustellen ist. Zum anderen sind die zur Rotationsebene zurücktreibenden Fliehkraftmomente der Rotorblätter zu minimieren, beziehungsweise wenigstens zum Teil auszugleichen, sodass eine sich aus der Kräftebalance zwischen aerodynamischen Kräften und Fliehkräften ergebende Anstellwinkeleinstellung zu den gewünschten hinreichend großen Relativwinkeln zwischen der Symmetrieebene der Rotorblätter und der Rotationsebene führt. Im Einzelnen werden hierbei erfindungsgemäß folgende Maßnahmen getroffen:
Die an den Rotorblättern angreifenden aerodynamischen Kräfte führen zunächst zu einem aerodynamischen Nickmoment, das jedoch aufgrund der kleinen Anströmungswinkel zu vernachlässigen ist. Demnach entsteht der Hauptanteil der für die gewünschte Herausdrehung der Rotorblätter aus der Rotationsebene verantwortlichen aerodynamischen Kräfte durch die Vektoraddition aus Strömungswiderstand und Auftriebskraft auf das im Sinne eines Tragflügels wirkende symmetrische Profil. Wird nun die Drehachse für ein Rotorblatt so angelegt, dass für jeden Profilschnitt der Auffädelpunkt, in dem die Drehachse die Profilsehne schneidet, in einem Bereich zwischen der Profilnase und dem aerodynamischen Zentrum des Profils liegt, so entsteht ein Drehmoment um den Auffädelpunkt, das umso größer ist, je weiter dieser zur Profilnase hin verschoben ist. Hieraus ergibt sich eine erste Anforderung zur Anordnung der Drehachse.
Diese liegt demnach in einem Bereich zwischen der Profilnase und dem aerodynamischen Zentrum des Profils, das typischerweise im Bereich von c_{b}/4 liegt, wobei c_{b} für die Sehnenlänge steht.

Zusätzlich greifen an die umlaufenden Rotorblätter Fliehkraftmomente an, wobei diese für einen Drehpunkt, der wie voranstehend beschrieben im vorderen Teil des Profilsschnitts gewählt ist, ein Drehmoment erzeugen, das die bewegten Rotorblätter zur Rotationsebene zurückführt, wodurch das Flächenträgheitsmoment minimiert wird. Die gemäß des Stands der Technik verwendeten Rotorblätter aus Aluminium-Vollmaterial führen für den typischen Betriebsfall einer Wells-Turbine in einem OWC-Kraftwerk zu einem Momentengleichgewicht zwischen dem aerodynamischen Moment und dem Fliehkraftmoment an den Rotorblättern, aus dem Anstellwinkel in der Größenordnung von ≤ 0,5° resultieren. Diese sind für die gewünschte Effizienzsteigerung und die Erweiterung des Arbeitsbereichs einer Wells-Turbine zu klein.

Die Erfinder haben daher erkannt, dass für eine passive Rotorblattverstellung für Wells-Turbinen Vorkehrungen getroffen werden müssen, die das auf die Rotationsebene zurückzuführende Fliehkraftmoment an den Rotorblättern verringern oder ausgleichen. Hierzu werden verschiedene erfindungsgemäße Maßnahmen vorgeschlagen, die einzeln oder in Kombination das voranstehend genannte Ziel erfüllen.

Eine Maßnahme besteht darin, die Masse der Rotorblätter insbesondere in den längs der Profilsehne zur Drehachse beabstandeten Bereichen zu verringern. Hierzu wird bevorzugt, anstatt der dem Stand der Technik entsprechenden Ausbildung der Rotorblätter aus Aluminium, das eine Dichte von 2700 kg/m³ aufweist, ein Material zu verwenden, das leichter ist bzw. anstatt eines Vollprofils ein Profil verwendet, das wenigstens in Teilbereichen hohl ausgebildet ist. Dies kann beispielsweise mittels eines faserverstärkten Verbundwerkstoffs, insbesondere eines Verbundwerkstoffs, der Glas- oder Kohlefaser enthält, realisiert werden.

Zum Vergleich der erfindungsgemäßen Rotorblätter mit konventionellen Ausgestaltungen wird für die vorliegende Anwendung der Begriff einer "gemittelten Dichte" der Rotorblätter eingeführt. Hierunter wird verstanden, die Dichte über einen Profilschnitt zu mitteln, sodass es möglich ist, Rotorblätter, die aus einer Kompositstruktur bestehen oder Hohlräume aufweisen, mit einem Rotorblatt zu vergleichen, das entsprechend des Stands der Technik aus einem Vollmaterial, typischerweise Aluminium, hergestellt ist. Besonders bevorzugt wird die gemittelte Dichte der Rotorblätter kleiner als der entsprechende Wert für ein Aluminium-Vollmaterial von 2700 kg/m³ gewählt.

Für eine weitere erfindungsgemäße Maßnahme wird innerhalb einer vorgegebenen Profilkontur die Massenverteilung so angepasst, dass das Flächenzentrifugalmoment verringert wird. Hierzu erfolgt für die Massenverteilung entlang der Profilsehne eine örtliche Konzentration um die Drehachse. Demnach werden jene Bereiche, die in Richtung der Profilsehne von der Drehachse beabstandet sind, leichtbauend ausgebildet. Entsprechend können anstrom- und/oder abstromseitig am Rotorblatt Bereiche aus einem Material geringerer Dichte oder Hohlräume vorgesehen sein. Für die voranstehend genannte Anordnung des Auffädelpunkts in einem Intervall auf der Profilsehne zwischen der Profilnase und dem aerodynamischen Zentrum des Profils bietet sich die Ausgestaltung eines Hohlraums im abstromseitigen Bereich an, da dort der quadratisch in die Berechnung des Flächenzentrifugalmoments eingehende Abstand zur Drehachse besonders groß ist.

Für eine dritte erfindungsgemäße Maßnahme wird das Flächenzentrifugalmoment der Rotorblätter durch entgegengesetzt wirkende Zentrifugalkräfte verringert. Dies gelingt durch eine Spreizung der Massenverteilung entlang der Drehachse quer zur Profilsehne. Alternativ oder zusätzlich können Ausgleichsgewichte vorgesehen sein, die außerhalb des angeströmten Teils des Rotorblatts angelegt und mit diesem drehstarr verbunden sind. Gemäß einer vorteilhaften Ausgestaltung sind die Ausgleichsgewichte im Fußteil der Rotorblätter angeordnet und liegen innerhalb der Nabe der Wells-Turbine. Entsprechend kann sich die Anordnung der Ausgleichsgewichte durch die Formgestaltung und/oder Materialverteilung des Fußteils ergeben. Für eine andere bevorzugte Ausgestaltung werden innerhalb der Nabe separate Gewichtskörper, beispielsweise Bleikugeln, vorgesehen, die lotrecht zur Profilsehne einen Abstand r_{A} zum Drehpunkt aufweisen. Diese Gewichtskörper sind paarweise vorgesehen, das heißt, sie sind symmetrisch zur Profilsehne angeordnet.

Nachfolgend wird die Erfindung anhand von Ausführungsbeispielen in Zusammenhang mit Figurendarstellungen genauer beschrieben, in denen im Einzelnen Folgendes dargestellt ist:
- Figur 1: zeigt einen Teilausschnitt mit einem Rotorblatt einer erfindungsgemäßen Wells-Turbine als Draufsicht auf die Rotationsebene.
- Figur 2: zeigt einen Schnitt A-A aus Figur 1.
- Figur 3: zeigt einen Schnitt B-B aus Figur 1 für das Fußteil eines erfindungsgemäßen Rotorblatts.
- Figur 4: zeigt einen Schnitt C-C aus Figur 1 für eine Ausgestaltung des erfindungsgemäßen Rotorblatts mit in die Nabe aufgenommenen Gegengewichten.

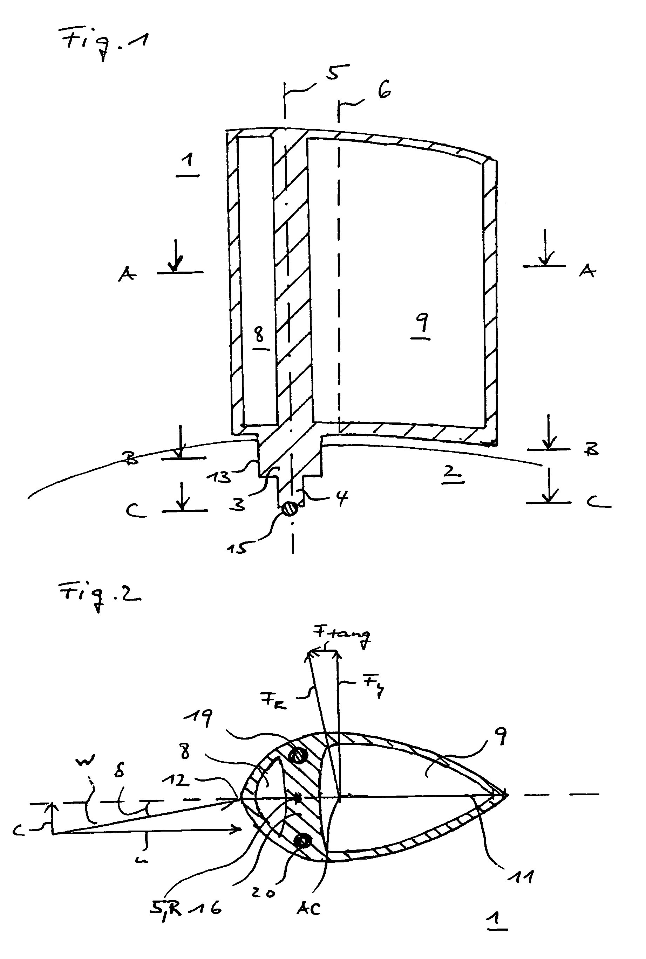

Aus der skizzenhaften Darstellung von Figur 2 sind die Anströmungsverhältnisse für eine rotierende Wells-Turbine anhand eines Profilschnitts für das Rotorblatt 1 dargestellt. Gezeigt ist der sich aus der Vektoraddition der Geschwindigkeit der Luftströmung c und der negativen Rotationsgeschwindigkeit u des Rotorblatts 1 ergebende effektive Anströmungsvektor w und der damit verbundene effektive Anströmungswinkel δ, der, charakteristisch für Wells-Turbinen, klein ist.

Die sich durch den Tragflächeneffekt am symmetrischen Profil ergebende aerodynamische Kraft F_{R} greift am aerodynamischen Zentrum AC an, das typischerweise bei einem Viertel der Länge der Profilsehne 11 liegt. Diese aerodynamische Kraft F_{R} kann vektoriell in eine Tangentialkraftkomponente F_{tang} und in einer Querkraftkomponente Fy zerlegt werden, wobei die Tangentialkraftkomponente F_{tang} dem Vortrieb dient und die Querkraftkomponente Fy im Fall eines starren Rotorblatts durch das Lager der Wells-Turbine aufzufangen ist.

Vorliegend wird eine passive Rotorblatteinstellungsvorrichtung verwendet. Diese umfasst gemäß einer vorteilhaften Ausgestaltung ein typischerweise kreisförmig ausgebildetes Fußteil 3, das sich radial innen am Rotorblatt 1 befindet und das in eine als Gegenstück geformte Ausnehmung 13 in der Nabe 2 eingelassen ist. Dieses Fußteil 3 umfasst vorteilhafterweise einen Drehzapfen 4, der die Drehachse 5 des Rotorblatts 1 festlegt und der darüber hinaus vorteilhafterweise der Verankerung in radialer Richtung dient.

Entsprechend der Darstellung in Figur 1 liegt die Drehachse 5 stromaufwärts zum Verlauf des aerodynamischen Zentrums 6. Dies ist wiederum ersichtlich aus der Schnittdarstellung in Figur 2. Diese zeigt eine Anordnung des Schnittpunkts der Drehachse 5 mit der Profilsehne 11 in einem Punkt, der nachfolgend als Auffädelpunkt R bezeichnet wird. Dieser Auffädelpunkt R liegt möglichst nahe der Profilnase 12 und stromaufwärts des aerodynamischen Zentrums AC, um ein das Rotorblatt 1 aus der Rotationsebene 21 um die Drehachse 5 herausdrehendes Moment zu erzeugen.

Ein gegen das aerodynamische Moment wirkendes Flächenzentrifugalmoment ergibt sich aus dem langgestreckten Profilverlauf für den Fall eines Herausdrehens des Rotorblatts aus der Rotationsebene 21, sodass gemäß einer erfindungsgemäßen Maßnahme unter Beibehaltung der äußeren Kontur des Profils die Massenverteilung im Innern des Profils so angepasst wird, dass in der durch den Verlauf der Profilsehne 11 vorgegebenen Längsrichtung eine Massenkonzentration um den Auffädelpunkt R erzielt wird. Zusätzlich wird bevorzugt die Massenverteilung im Bereich der Drehachse 5 quer zur Profilsehne 11 gespreizt. Eine Ausgestaltung einer solchen Massenverteilung innerhalb der Rotorblätter 1 ist in den Figuren 1 und 2 dargestellt.

Gezeigt ist die Verwendung eines Hohlprofils anstatt des gemäß des Stands der Technik verwendeten Vollprofils. Gemäß der skizzenhaften Darstellung ist das Rotorblatt 1 mit einem anstromseitigen Hohlraum 8, der vor der Drehachse 5 liegt, und einem nach der Drehachse 5 angeordneten, abstromseitigen Hohlraum 9 versehen. Zur Realisierung eines solchen Hohlprofils können Glas- oder Kohlenstofffasern enthaltende Verbundmaterialien verwendet werden. Diese Maßnahme führt zum einen zu einer verringerten Masse des Rotorblatts 1 und damit zu einer generellen Verringerung der Flächenzentrifugalkräfte. Zum anderen entsteht die gewünschte Massenkonzentration längs zur Profilsehne 11 und die verstärkte Spreizung der Massenverteilung im Bereich der Drehachse 5 quer zur Profilsehne 11. Letzteres wird dadurch erreicht, dass ein Quersteg 16 innerhalb des Profils angelegt ist, der die Drehachse 5 aufnimmt und der in den Bereichen mit Querabstand zum Drehpunkt massiv ausgebildet ist. Dieser weist eine im Wesentlichen senkrechte Orientierung zur Profilsehne 11 auf. Durch die daraus resultierende hantelförmige Massenverteilung lotrecht zur Profilsehne 11 mit der Drehachse 5 als Zentrum entsteht für einen nicht verschwindenden Anstellwinkel α des Rotorblatts beim Umlauf ein aufschwenkender Beitrag zum Fliehkraftmoment.

Dieser Beitrag kann durch die Anbringung eines ersten Zusatzgewichts 19 und eines symmetrisch angeordneten zweiten Zusatzgewichts 20 aus einem Material hoher Dichte, etwa Blei, in den Endbereichen des Querstegs 16 erhöht werden. Zum Vergleich einer erfindungsgemäßen Massenverteilung des Profils mit einem Profil aus einem Vollmaterial wird in der vorliegenden Anmeldung der Begriff einer "in Querrichtung gemittelten Dichte entlang der Profilsehne" eingeführt. Diese bezeichnet eine Mittelung der Massendichte jeweils senkrecht zur Profilsehne 11. Entlang der Profilsehne 11 wird sich dieser Wert dann verringern, wenn wenigstens in einem Teil der Quererstreckung lotrecht zur Profilsehne 11 Hohlräume oder Leichtbaumaterialen verwendet werden. Verallgemeinert besteht demnach eine erfindungsgemäß vorgesehene Maßnahme darin, dass die in Querrichtung gemittelte Dichte entlang der Profilsehne 11 in den von der Drehachse 5 längs, d.h. parallel zur Profilsehne 11 beabstandeten Bereichen verringert wird. Dabei ist es besonders effektiv, die gemittelte Dichte entlang der Profilsehne an den an- und abstromseitigen Profilenden zu verringern. Anstatt Hohlräume zu verwenden, ist es auch möglich, leichtbauende Materialien, etwa eine Ausschäumung, mit Materialien, die die Strukturfestigkeit sicherstellen, zu kombinieren. Ferner können in den Hohlräumen zur Versteifung Verstrebungen vorgesehen sein.

Den voranstehend beschriebenen, erfindungsgemäßen Maßnahmen betreffend die Massenverteilung innerhalb des Profils der Rotorblätter 1 werden typischerweise durch die Anforderungen an die Struktur- und Biegefestigkeit Schranken gesetzt, sodass vielfach eine vollständige Kompensation des zur Rotationsebene 21 zurückführenden Flächenzentrifugalmoments nicht möglich ist. Demnach ist als weitere erfindungsgemäße Maßnahme, die wiederum als Alternative oder zusätzlich zu den voranstehenden Maßnahmen zur Ausführung der Erfindung verwendet werden kann, vorgesehen, Zusatzgewichte am Fußteil 3 des Rotorblatts 1 zu befestigen, die die Flächenzentrifugalmomente des Rotorblatts 1 ausbalancieren.

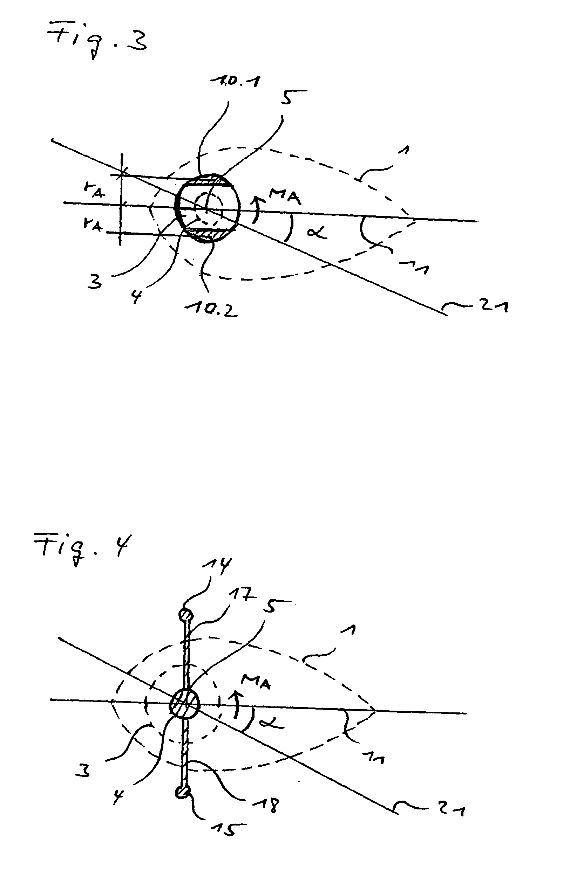

Hierzu ist in der Schnittdarstellung von Figur 3, die den Schnitt entlang der Linie B-B aus Figur 1 zeigt, eine Draufsicht auf eine solchermaßen erfindungsgemäße Ausgestaltung gezeigt. Sichtbar ist die kreisförmige Kontur des Fußteils 3. Zur besseren Verständlichkeit sind Teile des Rotorblatts 1, die oberhalb und unterhalb des Schnitts B-B liegen, gestrichelt dargestellt. Dies sind der obere Teil der Rotorblätter 1, die die Anströmungsflächen bilden, und der sich radial nach innen am Fußteil anschließende Drehzapfen 4.

Aus Figur 3 ergibt sich die erfindungsgemäße Maßnahme einer paarweisen Anordnung eines ersten Ausgleichsgewichts 10.1 und eines zweiten Ausgleichsgewichts 10.2, die jeweils einen Abstand r_{A} zur Drehachse 5 aufweisen. Demnach folgt eine senkrechte Anordnung der Ausgleichsgewichte 10.1, 10.2 zur Profilsehne 11. Hieraus ergibt sich beim Umlauf des Rotorblatts 1 im Falle eines nicht verschwindenden Anstellwinkels ein aufschwenkendes Zentrifugalmoment M_{A}, das gegen das Flächenzentrifugalmoment wirkt. Besonders bevorzugt sind die Ausgleichsgewichte Massekörper, die in eine Kompositstruktur des Fußteils eingelassen sind. Diese Massekörper sollten von hoher Dichte sein, beispielsweise können hierfür Bleikörper verwendet werden. Ferner wird bevorzugt, durch die Anordnung und Dimensionierung der Ausgleichsgewichte 10.1, 10.2 das aufschwenkende Drehmoment M_{A} so einzustellen, dass das Flächenzentrifugalmoment wenigstens zu 85% kompensiert wird. Bevorzugt wird eine weitergehende Kompensation von mindestens 90% und besonders bevorzugt von mindestens 95%.

Figur 4 zeigt eine weitere Ausgestaltungsalternative mit Gegengewichten. Dargestellt ist die Draufsicht auf die Schnittebene C-C aus Figur 1, aus der sich die Verwendung eines ersten separaten Ausgleichsgewichts 14 und eines zweiten separaten Ausgleichsgewichts 15 ergibt. Diese können beispielsweise als Bleikugeln ausgebildet sein und mittels einer ersten Strebe 17 und einer zweiten Strebe 18 am Drehzapfen 4 befestigt sein. Demnach sind die separaten Ausgleichsgewichte 14, 15 bevorzugt innerhalb der Nabe 2 in Ausnehmungen angeordnet.

Die erfindungsgemäßen Maßnahmen werden dazu verwendet, eine passive Rotorblattverstellung für eine Wells-Turbine einzurichten, die im Bereich hoher Durchflusskoeffizienten und beim Erreichen der Betriebsdrehzahl eine Anstellwinkeleinstellung von wenigstens 5° ermöglicht. Bevorzugt werden größere Anstellwinkel, die den Wirkungsgrad noch weiter steigern. Dies wird erreicht durch eine möglichst weitgehende Kompensation der Gesamtheit der an einem Rotorblatt 1 angreifenden Fliehkraftmomente. Gelingt dies weitgehend, werden an der Wells-Turbine zusätzliche Anschläge vorgesehen, die die durch das aerodynamische Moment bedingten Anstellwinkel begrenzen.

### Bezugszeichenliste

- 1: Rotorblatt
- 2: Nabe
- 3: Fußteil
- 4: Drehzapfen
- 5: Drehachse
- 6: Verlauf des aerodynamischen Zentrums
- 8: anstromseitiger Hohlraum
- 9: abstromseitiger Hohlraum
- 10.1: erstes Ausgleichsgewicht
- 10.2: zweites Ausgleichsgewicht
- 11: Profilsehne
- 12: Profilnase
- 13: Ausnehmung
- 14: erstes separates Ausgleichsgewicht
- 15: zweites separates Ausgleichsgewicht
- 16: Quersteg
- 17: erste Strebe
- 18: zweite Strebe
- 19: erstes Zusatzgewicht
- 20: zweites Zusatzgewicht
- 21: Rotationsebene

- α: Anstellwinkel
- δ: effektiver Anströmungswinkel
- AC: aerodynamisches Zentrum
- c: Geschwindigkeit der Luftströmung
- F_{R}: aerodynamische Kraft
- F_{tang}: Tangentialkraftkomponente
- Fy: Querkraftkomponente
- M_{A}: aufschwenkendes Zentrifugalmoment
- r_{A}: lotrechter Abstand zum Drehpunkt
- R: Auffädelpunkt
- S: Schwerpunkt
- u: negative Rotationsgeschwindigkeit
- w: effektiver Anströmungsvektor

## Patentansprüche

1. Wells-Turbine, umfassend
1.1 eine Nabe (2), die eine Vielzahl von Rotorblättern (1) mit einem von einer Profilnase ausgehend tropfenförmig ausgebildeten, symmetrischen Profil trägt; die wells- Turbine **dadurch gekennzeichnet, dass**
1.2 die Rotorblätter (1) mittels eines Fußteils (3) drehbar an der Nabe (2) befestig sind sodass deren Anstellwinkeleinstellung (α) zur Rotationsebene (21) variierbar ist, wobei die zugeordnete Drehachse (5) für jeden Profilschnitt in einem Auffädelpunkt (R) die Profilsehne (11) schneidet, der in einem Bereich zwischen der Profilnase (12) und dem aerodynamischen Zentrum (AC) des Profils liegt;
1.3 die Anstellwinkeleinstellung (α) durch das sich beim Betrieb der Wells-Turbine einstellende Gleichgewicht zwischen den an den Rotorblättern (1) angreifenden aerodynamischen Momenten und den Fliehkraftmomenten passiv erfolgt, wobei die gemittelte Dichte der Rotorblätter (1) kleiner als 2700 kg/m³ gewählt wird und/oder die Massenverteilung innerhalb des Profils so gestaltet ist, dass das Flächenzentrifugalmoment der Rotorblätter (1) gegenüber einem Profil aus einem Vollmaterial verringert ist und/oder das Flächenzentrifugalmoment der Rotorblätter (1) wenigstens teilweise durch Ausgleichsgewichte (10.1, 10.2, 14, 15) ausgeglichen wird, die in einem Abstand (r_{A}) zum Drehpunkt und senkrecht zur Profilsehne (11) angeordnet sind.

2. Wells-Turbine nach Anspruch 1, **dadurch gekennzeichnet, dass** die Rotorblätter (1) wenigstens teilweise aus einem Hohlprofil bestehen.

3. Wells-Turbine nach Anspruch 2, **dadurch gekennzeichnet, dass** das Hohlprofil wenigstens in Teilbereichen durch ein Material aufgefüllt ist, dessen Dichte geringer ist als die des Wandungsmaterials des Hohlprofils.

4. Wells-Turbine nach einem der vorhergehenden Ansprüche, **dadurch gekennzeichnet, dass** die Rotorblätter (1) aus einem faserverstärkten Verbundwerkstoff hergestellt sind, insbesondere aus einem Verbundwerkstoff, der Kohlefasern und/oder Glasfasern umfasst.

5. Wells-Turbine nach einem der vorhergehenden Ansprüche, **dadurch gekennzeichnet, dass** ein Rotorblatt (1) einen anstromseitigen Hohlraum (8), der vor der Drehachse (5) liegt, und/oder einen nach der Drehachse (5) angeordneten, abstromseitigen Hohlraum (9) umfasst.

6. Wells-Turbine nach einem der vorhergehenden Ansprüche, **dadurch gekennzeichnet, dass** die Ausgleichsgewichte (10.1, 10.2, 14, 15) im oder am Fußteil (3) paarweise zu beiden Seiten der Profilsehne angeordnet sind.

7. Wells-Turbine nach einem der vorhergehenden Ansprüche, **dadurch gekennzeichnet, dass** die Ausgleichsgewichte (10.1, 10.2, 14, 15) durch die Form- und/oder die Materialverteilung im Fußteil (3) ausgebildet sind.

8. Wells-Turbine nach einem der vorhergehenden Ansprüche, **dadurch gekennzeichnet, dass** das Fußteil (3) eine Kompositstruktur bildet, in die Gewichtskörper zur Ausbildung der Ausgleichsgewichte (10.1, 10.2) aufgenommen sind.

9. Wells-Turbine nach einem der vorhergehenden Ansprüche, **dadurch gekennzeichnet, dass** am Fußteil (3) separate Ausgleichsgewichte (14, 15) befestigt sind, die innerhalb der Nabe (2) der Wells-Turbine angeordnet sind.

10. Wells-Turbine nach einem der vorhergehenden Ansprüche, **dadurch gekennzeichnet, dass** innerhalb der Profilkontur eines Rotorblatts (1) Zusatzgewichte (19, 20) lotrecht zur Profilsehne (11) und mit Querabstand zur Drehachse (5) angeordnet sind.

11. Wells-Turbine nach einem der vorhergehenden Ansprüche, **dadurch gekennzeichnet, dass** im Bereich der Drehachse (5) ein Quersteg (16) mit hantelförmiger Massenverteilung und einem zur Profilsehne (11) senkrechten Verlauf angelegt ist.

## Claims

1. A Wells turbine, comprising
1.1 a hub (2) which carries a plurality of rotor blades (1) with a drop-shaped, symmetrical profile starting from a profile nose; the Wells turbine being **characterised in that**
1.2 the rotor blades (1) are fastened rotatably to the hub (2) by means of a foot section (3), so that the adjustment of their angle of incidence (a) can be varied relative to the rotation plane (21), wherein the associated rotational axis (5) intersects the profile chord (11) for each profile section in a threading point (R), which lies in a region between the profile nose (12) and the aerodynamic centre (AC) of the profile;
1.3 the angle of incidence (a) is adjusted passively by the balance established during the operation of the Wells turbine between the aerodynamic torques applied to the rotor blades (1) and the centrifugal force torques, wherein the averaged density of the rotor blades (1) is selected smaller than 2700 kg/m3 and/or the mass distribution inside the profile is designed in such a way that the surface centrifugal torque of the rotor blades (1) is reduced compared to a profile made of a full material and/or the surface centrifugal torque of the rotor blades (1) is compensated at least partially for by compensatory weights (10.1, 10.2, 14, 15), which are arranged at a distance (rA) with respect to the fulcrum and perpendicular to the profile chord (11).

2. A Wells turbine according to claim 1, **characterised in, that** the rotor blades (1) consist at least partially of a hollow profile.

3. A Wells turbine according to claim 2, **characterised in that** the hollow profile is filled at least in partial regions with a material, whose density is smaller than that of the wall material of the hollow profile.

4. A Wells turbine according to one of the preceding claims, **characterised in that** the rotor blades (1) are made of a fibre-reinforced composite material, in particular of a composite material which contains carbon fibres and/or glass fibres.

5. A Wells turbine according to one of the preceding claims, **characterised in that** a rotor blade (1) includes a cavity (8) on the inflow side, upstream of the rotational axis (5) and/or a cavity on the outflow, downstream of the rotational axis (5).

6. A Wells turbine according to one of the preceding claims, **characterised in that** the compensatory weights (10.1, 10.2, 14, 15) are arranged in pairs on both sides of the profile chord in the or on the foot section (3).

7. A Wells turbine according to one of the preceding claims, **characterised in that** the compensatory weights (10.1, 10.2, 14, 15) are formed by the form and/or material distribution in the foot section (3).

8. A Wells turbine according to one of the preceding claims, **characterised in that** the foot section (3) forms a composite structure, in which weight bodies are accommodated for obtaining the compensatory weights (10.1, 10.2).

9. A Wells turbine according to one of the preceding claims, **characterised in that** separate compensatory weights (14, 15) are secured on the foot section (3), said weight being arranged inside the hub (2) of the Wells turbine.

10. A Wells turbine according to one of the preceding claims, **characterised in that** additional weights (19, 20) are arranged perpendicular to the profile chord (11) and at a transverse distance to the rotational axis (5) inside the profile contour of a rotor blade (1).

11. A Wells turbine according to one of the preceding claims, **characterised in that** a cross bar (16) with dumb-bell shaped mass distribution and a vertical curve to the profile chord (11) is arranged in the area of the rotational axis (5).

## Revendications

1. Turbine Wells, comprenant
1.1 un moyeu (2) portant une pluralité de lames de rotor (1) au profil de manière symétrique, en forme de goutte à partir d'un nez de profil; ladite turbine Wells étant **caractérisée en ce que**
1.2 les lames de rotor (1) sont fixées de manière rotative sur le moyeu (2) à l'aide d'une partie pied (3) de sorte que le réglage de leur angle d'incidence (a) est variable par rapport au plan de rotation (21), dans laquelle l'axe de rotation associé (5) coupe la corde de profil (11) en un point d'enfilage (R) pour chaque section de profil reposant dans une zone située entre le nez de profil (12) et le centre aérodynamique (AC) du profil;
1.3 le réglage d'angle d'incidence (a) se déroule de manière passive grâce à l'équilibre s'établissant pendant l'exploitation de la turbine Wells entre les couples aérodynamiques appliqués au niveau des lames de rotor (1) et les couples de force centrifuge, dans laquelle on choisit une densité moyennée des lames de rotor (1) inférieure à 2700 kg/m3 et/ou la répartition en masse à l'intérieur du profil est conçue de telle sorte que le couple centrifuge superficiel des lames de rotor (1) est réduit par rapport à un profil constituté d'un matériau plein et/ou l'on compense le couple centrifuge superficiel des lames de rotor (1) au moins partiellement à l'aide de tares (10.1, 10.2, 14, 15) qui sont disposées à une certaine distance (r) du point de rotation et perpendiculaires à la corde de profil (11).

2. Turbine Wells selon la revendication 1, **caractérisé en ce que** les lames de rotor (1) se composent au moins partiellement d'un profil creux.

3. Turbine Wells selon la revendication 2, **caractérisée en ce que** le profil creux est rempli d'un matériau au moins dans des zones partielles de matériau dont la densité est inférieure à celle du matériau de paroi du profil creux.

4. Turbine Wells selon l'une quelconque des revendications précédentes, **caractérisée en ce que** les lames de rotor (1) sont constituées à partir d'un matériau composite renforcé de fibres, en particulier un matériau composite contenant des fibres de carbone et/ou des fibres de verre.

5. Turbine Wells selon l'une quelconque des revendications précédentes, **caractérisée en ce qu'**une lame de rotor (1) contient une cavité (8) côté afflux, en amont de l'axe de rotation (5), et/ou une cavité (9) côté efflux disposée en aval de l'axe de rotation (5).

6. Turbine Wells selon l'une quelconque des revendications précédentes, **caractérisée en ce que** les tares (10.1, 10.2, 14, 15) sont disposées en paires dans ou sur la partie pied (3) des deux côtés de la corde de profil.

7. Turbine Wells selon l'une quelconque des revendications précédentes, **caractérisée en ce que** les tares (10.1, 10.2, 14, 15) sont constituées par la répartition des formes et/ou du matériau dans la partie pied (3).

8. Turbine Wells selon l'une quelconque des revendications précédentes, **caractérisée en ce que** la partie pied (3) forme une structure composite, dans laquelle des corps de poids sont reçus pour constituer les tares (10.1, 10.2).

9. Turbine Wells selon l'une quelconque des revendications précédentes, **caractérisée en ce que** des tares séparées (14, 15) sont fixées au niveau de la partie pied (3), lesquelles tares sont disposées à l'intérieur du moyeu (2) de la turbine Wells.

10. Turbine Wells selon l'une quelconque des revendications précédentes, **caractérisée en ce que** des poids supplémentaires (19, 20) sont disposés perpendiculaires à la corde de profil (11) et à une distance transversale de l'axe de rotation (5) à l'intérieur du profil d'une lame de rotor (1).

11. Turbine Wells selon l'une quelconque des revendications précédentes, **caractérisée en ce qu'**une barre transversale (16) présentant une répartition en masse en forme d'haltère et une courbe perpendiculaire à la corde de profil (11) est installée dans la zone de l'axe de rotation (5).
